# FASCICULE DE BREVET EUROPEEN

(11) **EP 3 792 866 B1**
(45) Date de publication et mention de la délivrance du brevet: **11.10.2023**
(21) Numéro de dépôt: 20180934.0
(22) Date de dépôt: 18.06.2020
(51) Int. Cl.: G06T 1/20

(54) **PROCESSEUR GRAPHIQUE ET PROCÉDÉ ASSOCIÉ D'AFFICHAGE D'UN ENSEMBLE DE PIXEL(S), PLATEFORME ET SYSTÈME AVIONIQUE ASSOCIÉS**
GRAFISCHER PROZESSOR UND ENTSPRECHENDES ANZEIGEVERFAHREN EINER GESAMTHEIT VON PIXELN, ENTSPRECHENDE PLATTFORM UND ENTSPRECHENDES FLUGZEUGELEKTRONIKSYSTEM
GRAPHIC PROCESSOR AND ASSOCIATED METHOD FOR DISPLAYING A SET OF PIXEL(S), ASSOCIATED PLATFORM AND AVIONICS SYSTEM

(30) Priorité: 16.09.2019 FR 1906704
(43) Date de publication de la demande: 17.03.2021
(73) Titulaire: THALES, 92400 Courbevoie (FR)
(72) Inventeur: FINE, Alexandre, 33700 MERIGNAC (FR); FILLIATRE, Eric, 33700 CS50108 MERIGNAC (FR); LEVASSEUR, Nicolas, 33700 CS50108 MERIGNAC (FR)
(74) Mandataire: Lavoix

(56) Documents cités:
- US-A1- 2016 071 231
- US-A1- 2017 177 458
- US-B2- 10 169 840

## Description

La présente invention concerne un processeur graphique comprenant un module de génération d'au moins un ensemble de pixel(s) à afficher et un module d'affichage de chaque ensemble de pixel(s) sur un écran, le module d'affichage étant relié au module de génération.

L'invention concerne également une plateforme comprenant un processeur graphique et un processeur central, le processeur graphique étant relié au processeur central.

L'invention concerne également un système avionique destiné à être embarqué à bord d'un aéronef, le système avionique comprenant une telle plateforme et un dispositif électronique de supervision de la plateforme, relié à la plateforme.

L'invention concerne également un procédé d'affichage de pixel(s) sur un écran, le procédé étant mis en oeuvre par un tel processeur graphique.

L'invention concerne le domaine des systèmes d'affichage de données, de préférence destinés à être embarqués à bord d'un aéronef, notamment dans un cockpit d'aéronef.

L'invention concerne en particulier le domaine des processeurs graphiques inclus dans ces systèmes d'affichage, ces processeurs graphiques étant également généralement appelés GPU (de l'anglais *Graphie Processing Unit*)*.* De tels processeurs graphiques sont typiquement réalisés sous forme d'un ou plusieurs circuits intégrés dédiés, tels qu'un ou plusieurs ASIC (de l'anglais *Application Spécifie Integrated Circuit*), ou encore sous forme d'un ou plusieurs composants logiques programmables, tels qu'un ou plusieurs FPGA (de l'anglais *Field-Programmable Gate Array*).

Chaque processeur graphique est généralement relié à un processeur central pour former une plateforme, le processeur central étant également généralement appelé CPU (de l'anglais *Central Processing Unit*)

On connait alors un processeur graphique du type précité pour lequel la surveillance d'un fonctionnement correct du processeur mise en oeuvre est une surveillance générique. Une telle surveillance générique vise à vérifier que le processeur graphique fonctionne correctement, indépendamment des calculs ou traitements effectués par le processeur graphique. La surveillance générique est par exemple basée sur une liste prédéfinie de modes de panne.

Toutefois, une telle surveillance n'est pas toujours adaptée, avec notamment la liste prédéfinie de modes de panne qui n'est généralement pas exhaustive.

En outre, une telle surveillance générique est parfois difficile à mettre en oeuvre, de par la complexité d'un tel processeur graphique. Cette complexité ressort typiquement des leviers permettant d'augmenter les performances d'un processeur graphique.

US 2016/0071231 A1 décrit aussi un processeur graphique du type précité.

US 10,169,840 B2 et US 2017/0177458 A1 concernent la surveillance d'un GPU, effectuée par un dispositif externe à ce GPU.

Classiquement, les leviers permettant d'augmenter les performances d'un processeur central ou CPU sont l'augmentation de la fréquence, avec les impacts sur l'augmentation de la consommation électrique et de la production de chaleur ; l'augmentation de la complexité des traitements effectués, avec des opérations spécialisées, des logiques de prédiction d'exécution de code, des logiques de pré-chargement des mémoires caches ; l'augmentation du nombre de coeurs de calcul dans le cas d'un processeur multi-coeur et l'introduction d'un parallélisme au niveau des instructions et des données. Globalement, un facteur de complexité de 2 sur un processeur ne conduit qu'à un facteur de gain de performance de 1,4.

Un autre levier permet d'augmenter les performances d'un processeur graphique, et ceci contribue à sa complexité. Cet autre levier est l'introduction d'un parallélisme massif de processeurs élémentaires (de l'anglais *thread*), avec le passage d'une approche multi-coeur pour le processeur central à une approche basée sur un nombre élevé de coeurs ou processeurs élémentaires pour le processeur graphique, typiquement plus de 100 coeurs ou processeurs élémentaires. A titre d'illustration quant aux gains de performance théoriques, deux processeurs élémentaires amènent un facteur de gain de performance de 1,8, ce qui est meilleur que le facteur de gain de performance précité pour le processeur central. Des gains en matière de consommation électrique sont également constatés.

De manière générale, la conception d'un processeur graphique basé sur la parallélisation d'un nombre élevé de processeurs élémentaires permet une simultanéité d'accès mémoires avec une organisation adéquate de ressources mémoire, une augmentation de la bande passante sans impact sur des latences d'accès, et une amélioration de la robustesse.

Au-delà de la complexité de l'architecture électronique mettant en oeuvre une parallélisation massive de ressources de calcul et mémoire, un deuxième facteur de complexité du processeur graphique vient de la difficulté de la programmation d'algorithmes parallèles, requise pour tirer profit de l'architecture électronique. Cette programmation nécessite notamment de maximiser la décomposition de tâches à effectuer par le processeur graphique, ceci pour une exécution parallèle optimale ; de coordonner les tâches, d'éviter des attentes ; et aussi de contrôler des surcoûts en matière d'échanges de données et/ou de calculs supplémentaires.

La surveillance générique d'un tel processeur graphique est donc souvent complexe et difficile à mettre en oeuvre.

Le but de l'invention est alors de proposer un processeur graphique offrant une meilleure surveillance de son fonctionnement.

A cet effet, l'invention a pour objet un processeur graphique, selon la revendication 1.

Ainsi, le processeur graphique selon l'invention permet, de par son unité de surveillance intégrée au module de génération, de déterminer une liste d'information(s) de contexte graphique pour au moins un pixel, puis de délivrer ladite liste à un dispositif externe de supervision. La liste d'information(s) de contexte graphique fournit alors des informations complémentaires sur le fonctionnement du processeur graphique, notamment sur l'affichage d'un ou plusieurs pixels de l'ensemble de pixel(s) à afficher.

Cette liste d'information(s) de contexte graphique permet alors d'effectuer une surveillance réelle du fonctionnement du processeur graphique, en complément de la surveillance générique de l'état de la technique.

Suivant d'autres aspects avantageux de l'invention, le processeur graphique est selon l'une des revendications 2 à 8.

L'invention a également pour objet une plateforme selon la revendication 9.

L'invention a également pour objet un système avionique selon la revendication 10.

L'invention a également pour objet un procédé d'affichage de pixel(s) sur un écran, selon la revendication 11.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un système avionique selon l'invention, destiné à être embarqué à bord d'un aéronef et comprenant une plateforme avionique et un dispositif électronique de supervision de la plateforme, la plateforme comportant un processeur central et un processeur graphique relié au processeur central ;
- la figure 2 est une illustration schématique d'objets successivement traités par le processeur graphique de la figure 1 ; et
- la figure 3 est un organigramme d'un procédé d'affichage selon l'invention, le procédé étant mis en oeuvre par le processeur graphique de la figure 1.

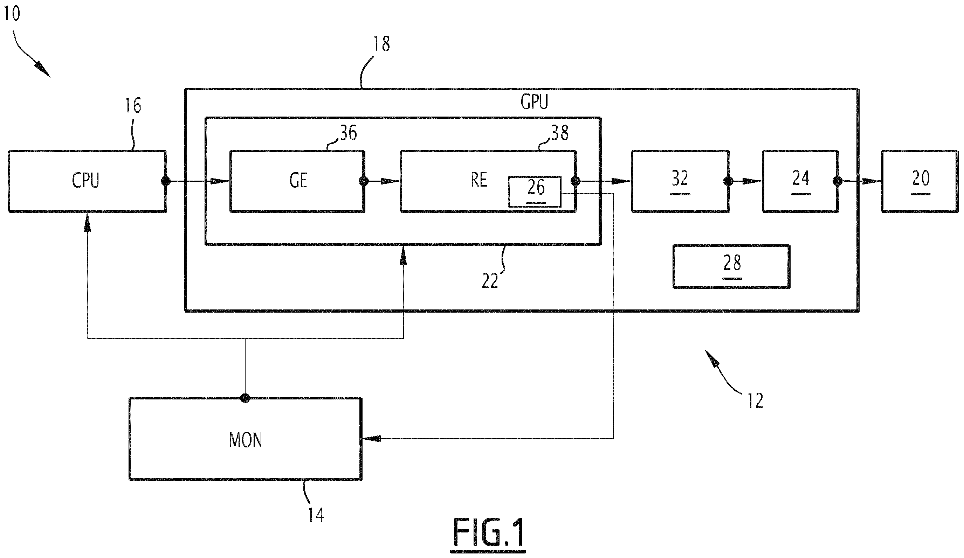

Sur la figure 1, un système avionique 10 comprend une plateforme avionique 12 et un dispositif électronique 14 de supervision de la plateforme 12, le dispositif de supervision 14 étant relié à la plateforme 12. Le système avionique 10 est destiné à être embarqué à bord d'un aéronef, non représenté.

La plateforme avionique 12 comprend un processeur central 16, également appelé CPU (de l'anglais *Central Processing Unit*), et un processeur graphique 18, également appelé GPU (de l'anglais *Graphie Processing Unit*), le processeur graphique 18 étant relié au processeur central 16.

En complément, la plateforme 12 comprend un écran d'affichage 20, relié par exemple au processeur graphique 18.

Le dispositif de supervision 14 est un dispositif électronique externe au processeur graphique 18 et apte à être relié audit processeur graphique 18. Dans l'exemple de la figure 1, le dispositif de supervision 14 est connecté au processeur graphique 18.

Le dispositif de supervision 14 est, de manière générale, configuré pour superviser le bon fonctionnement de la plateforme 12, et en particulier du processeur graphique 18. Le dispositif de supervision 14 est également appelé MON (de l'anglais *Monitor*). Le dispositif de supervision 14 est notamment apte à recevoir, de la part du processeur graphique 18, des informations relatives au fonctionnement dudit processeur graphique 18.

En complément, le dispositif de supervision 14 est également apte à recevoir des informations relatives au fonctionnement du processeur central 16. En complément facultatif, le dispositif de supervision 14 est également apte à envoyer des instructions de commande au processeur central 16 et/ou au processeur graphique 18.

Le processeur central 16 est connu en soi. Le processeur central 16 est un processeur mono-coeur ou bien un processeur multi-coeur.

Le processeur graphique 18 comprend un module 22 de génération d'au moins un ensemble de pixel(s) à afficher et un module 24 d'affichage de chaque ensemble de pixel(s) sur l'écran d'affichage 20, le module d'affichage 24 étant relié au module de génération 22.

Le processeur graphique 18 comprend en outre une unité de surveillance 26 intégrée au module de génération 22, et une mémoire 28 de stockage de données.

Le module de génération 22 est configuré pour générer au moins un ensemble de pixel(s) à afficher.

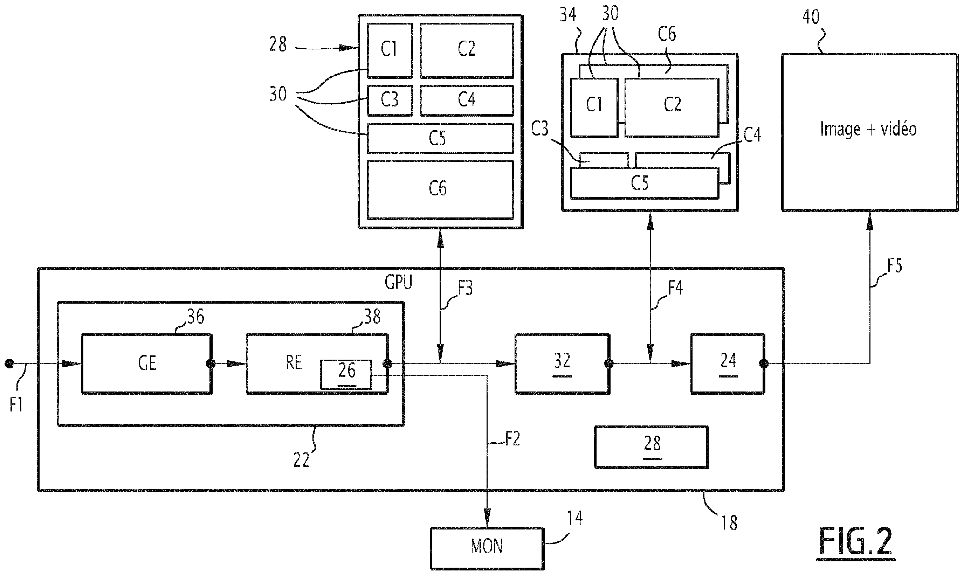

En complément facultatif, le module de génération 22 est configuré pour générer au moins une couche intermédiaire 30 d'images, visible sur la figure 2, chaque couche intermédiaire 30 comportant un ensemble respectif de pixel(s).

Selon ce complément facultatif, le processeur graphique 18 comprend en outre un module 32 de composition d'une image 34 à partir de la ou des couches intermédiaires 30 générée(s) par le module de génération 22, le module d'affichage 24 étant alors apte à afficher l'image 34 composée par le module de composition 32.

Le module de génération 22 comporte, par exemple, un moteur géométrique 36 apte à générer au moins un groupe de primitive(s) géométrique(s) et un moteur de rendu 38 apte à convertir chaque groupe de primitive(s) géométrique(s) en un ensemble respectif de pixel(s). Selon cet exemple, l'unité de surveillance 26 est de préférence intégrée au moteur de rendu 38. Le moteur géométrique 36 est également appelé GE (de l'anglais *Géométrie Engine*), et le moteur de rendu 38 est également appelé RE (de l'anglais *Raster Engine,* ou encore *Rendering Engine*).

Le module de génération 22, et en complément facultatif le module de composition 32, forment une chaîne de création graphique d'une image 34 respective, apte à être affichée à l'écran 20 par le module d'affichage 24. La chaîne de création graphique est également appelée pipeline graphique, et l'unité de surveillance 26 selon l'invention est alors intégrée, ou encore intrinsèque, audit pipeline graphique.

Le module d'affichage 24 est configuré pour afficher de manière générale chaque ensemble de pixel(s) sur l'écran 20, notamment pour afficher chaque image 34 sur l'écran 20.

En complément facultatif, le module d'affichage 24 est également configuré pour mélanger une image respective 34 avec une vidéo, par exemple stocké dans la mémoire de stockage 28, puis pour afficher le mélange 40 de l'image et de la vidéo sur l'écran d'affichage 20.

L'unité de surveillance 26 est configurée pour déterminer une liste d'information(s) de contexte graphique pour au moins un pixel, et pour délivrer ladite liste d'information(s) de contexte graphique au dispositif électronique externe de supervision 14.

Chaque ensemble de pixel(s) comporte une pluralité de pixel(s) correspondant à un groupe de primitive(s) géométrique(s) avec des points caractéristiques, et l'unité de surveillance 26 est alors configurée pour déterminer une liste respective d'information(s) de contexte graphique pour au moins l'un des pixels correspondant audit point caractéristique.

De préférence, l'unité de surveillance 26 est configurée pour déterminer une liste respective d'information(s) de contexte graphique seulement pour les pixels correspondants audit point caractéristique.

Chaque primitive géométrique est par exemple choisie parmi le groupe consistant en : un segment, un arc de cercle, une courbe de Bézier et un polygone.

Chaque primitive géométrique est de préférence un segment, c'est-à-dire un segment de droite, avec deux extrémités, ou bien un polygone avec des sommets, et les extrémités du segment ou les sommets du polygone forment alors des points caractéristiques respectifs pour lesquels l'unité de surveillance 26 est apte à déterminer une liste d'information(s) de contexte graphique.

Lorsqu'on complément facultatif le module de génération 22 comporte le moteur géométrique 36 et le moteur de rendu 38, chaque primitive géométrique est générée par le moteur géométrique 36, puis convertie par le moteur de rendu 38 en pixels correspondants.

Chaque liste d'information(s) de contexte graphique comprend une ou plusieurs informations choisies parmi le groupe consistant en : un identifiant du pixel surveillé ; une information de visibilité du pixel à l'écran 20 ; une information de position du pixel ; une information de texture du pixel ; et une information de couleur du pixel.

Chaque liste d'information(s) de contexte graphique comprend de préférence au moins les informations suivantes : l'identifiant du pixel surveillé et l'information de position du pixel, telles que les coordonnées du pixel dans un repère associé à l'écran 20, également appelé repère mémoire écran. L'identifiant du pixel surveillé est un identifiant référençant ledit pixel surveillé parmi tous les pixels surveillés, et permettant ensuite au dispositif de supervision 14 d'effectuer la supervision de ces pixels sur la base de chaque identifiant respectif.

Le repère mémoire écran est un repère utilisé en sortie du module de génération 22, par exemple le repère utilisé après application de l'ensemble des transformations graphiques par le moteur géométrique 36, puis par le moteur de rendu 38.

Chaque liste d'information(s) de contexte graphique comprend en outre de préférence un ou plusieurs attributs graphiques du pixel, c'est-à-dire l'information de texture du pixel, telle qu'un identifiant de texture, l'information de couleur du pixel, telle qu'une couleur du pixel, et l'information de visibilité du pixel, telle qu'une profondeur du pixel.

L'identifiant de texture permet d'identifier la texture associée au pixel parmi un groupe de textures possibles.

La couleur du pixel est par exemple exprimée sous forme d'un codage RVB ou RGB (de l'anglais *Red Green Blue*). En variante, la couleur est exprimée sous forme d'un codage sRGB.

La profondeur est un indicateur permettant d'indiquer à quelle profondeur se situe le pixel dans un empilement de couches intermédiaires 30 formant une image 34 respective, la visibilité du pixel à l'écran découlant alors de cette profondeur. Autrement dit, la profondeur (de l'anglais *depth*) du pixel dans l'empilement de couches est une information de priorité permettant de savoir si le pixel correspondant sera affiché ou non lors de la composition des couches intermédiaires 30 pour obtenir l'image composée 34.

En complément facultatif au moins une liste d'information(s) de contexte graphique comprend en outre une information fonctionnelle caractérisant une fonction associée au pixel surveillé. Chaque fonction est par exemple choisie parmi le groupe consistant en : une ligne d'horizon, une position d'aiguille dans un cadran, une graduation d'échelle, un curseur d'échelle, un segment de caractère alphanumérique et un point de maillage d'une scène. La scène est typiquement une scène en deux dimensions ou en trois dimensions, également appelée scène 2D ou scène 3D.

L'information fonctionnelle permet alors au dispositif de supervision 14 de savoir que le pixel surveillé appartient à une ligne d'horizon, respectivement à une graduation indiquant une position d'aiguille dans un cadran, respectivement à une graduation d'échelle, respectivement à un curseur d'échelle, respectivement à un segment de caractère alphanumérique, et plus généralement à un caractère alphanumérique, ou encore respectivement au maillage d'une scène, telle qu'une scène 2D ou 3D.

Autrement dit, lorsque cette information fonctionnelle est incluse dans la liste d'information(s) de contexte graphique pour le pixel surveillé, elle permet au dispositif de supervision 14 de connaître en plus de l'identifiant et de la position du pixel surveillé, ainsi que d'éventuels attributs graphiques, la fonction du pixel surveillé en termes d'informations affichées à l'écran 20.

Afin de délivrer la liste d'information(s) de contexte graphique au dispositif de supervision 14, l'unité de surveillance 26 est par exemple configurée pour enregistrer ladite liste dans une mémoire tampon (de l'anglais *buffer*)*,* également accessible par le dispositif de supervision 14.

L'homme du métier comprendra en outre que chaque liste d'information(s) de contexte graphique est déterminée par l'unité de surveillance 26 pour un pixel sur le point d'être affiché à l'écran 20, cette détermination de la liste d'information(s) de contexte graphique étant effectuée juste avant l'affichage de l'ensemble correspondant de pixel(s) à l'écran 20, ou bien juste avant la composition de l'image 34 à partir de la ou des couches intermédiaires 30, lorsqu'en complément facultatif le processeur graphique 18 comprend en outre le module de composition 32.

En particulier, lorsque le module de génération 22 comporte le moteur géométrique 36 et le moteur de rendu 38, l'unité de surveillance 26 est de préférence intégrée au moteur de rendu 38, et la détermination de chaque liste d'information(s) de contexte graphique est alors effectuée après la conversion de chaque groupe de primitive(s) géométrique(s) en un ensemble respectif de pixel(s).

La mémoire de stockage 28 est reliée à chacun des modules du processeur graphique 18, notamment au module de génération 22 et au module d'affichage 24, ainsi qu'en complément facultatif au module de composition 32.

Le module de composition 32 est configuré pour composer chaque image 34 à partir de la ou des couches intermédiaires 30 correspondantes, notamment en positionnant la ou lesdites couches intermédiaires 30, par exemple les unes par rapport aux autres, et en les superposant le cas échéant, ainsi que cela sera décrit plus en détail par la suite en regard de la figure 2.

Le moteur géométrique 36, ou GE, est configuré pour générer au moins un groupe de primitive(s) géométrique(s), c'est-à-dire pour générer une portion d'image vectorielle.

Le moteur de rendu 38 est ensuite configuré pour convertir chaque groupe de primitive(s) géométrique(s) en un ensemble respectif de pixel(s), c'est-à-dire pour convertir la portion d'image vectorielle correspondant au groupe de primitive(s) géométrique(s) en une portion d'image matricielle correspondant audit ensemble de pixel(s). Cette conversion effectuée par le moteur de rendu 38 est également appelée rastérisation, ou encore matricialisation.

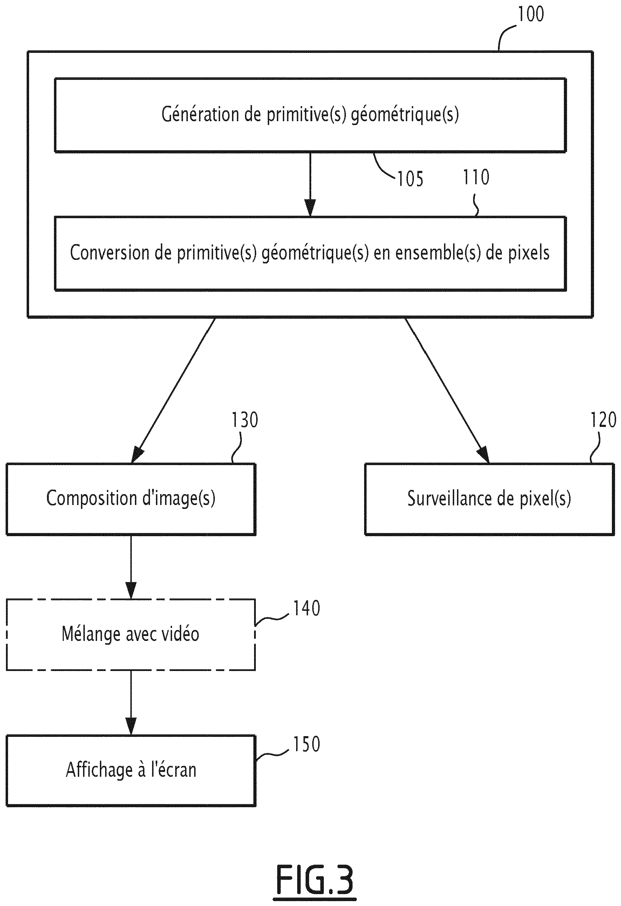

Le fonctionnement du système avionique 10 selon l'invention, et en particulier du processeur graphique 18, va désormais être expliqué à l'aide de la figure 3 représentant un organigramme du procédé d'affichage de pixel(s) à l'écran 20, mis en oeuvre par le processeur graphique 18, ainsi qu'en regard de la figure 2 illustrant des objets successivement traités par le processeur graphique 18.

Lors d'une étape initiale 100, le processeur graphique 18 génère, via son module de génération 22, au moins un ensemble de pixel(s) à afficher à l'écran 20.

Dans l'exemple des figures 1 et 2 où le module de génération 22 comporte le moteur géométrique 36 et le moteur de rendu 38, l'étape de génération 100 comporte une sous-étape 105 de génération de primitive(s) géométrique(s) effectuée par le moteur géométrique 36, également noté GE, suivie d'une sous-étape 110 de conversion de la ou des primitive(s) géométrique(s) générée(s) en un ou plusieurs ensembles respectifs de pixel(s), cette sous-étape 110 de conversion étant effectuée par le moteur de rendu 38, également noté RE.

En outre, préalablement à l'étape de génération 100 et comme représenté par la flèche F1 à la figure 2, le module de génération 22 a reçu, pour chaque pixel à surveiller, l'identifiant dudit pixel, par exemple de la part du processeur central 16 ou encore de la part du dispositif de supervision 14.

Suite à cette étape de génération 100, le processeur graphique 18 effectue, d'une part, une étape 120 de surveillance de chaque ensemble de pixel(s) généré(s), cette étape de surveillance 120 étant effectuée par l'unité de surveillance 26 à partir de chaque ensemble de pixel(s) généré, et d'autre part, une étape 130 de composition d'images 34, cette étape de composition 130 étant effectuée par le module de composition 32.

L'étape de surveillance 120 comporte alors, pour chaque pixel surveillé, la détermination d'une liste respective d'information(s) de contexte graphique, puis la délivrance de ladite liste au dispositif externe de supervision 14, comme représenté par la flèche F2 à la figure 2.

Comme décrit précédemment, chaque liste d'information(s) de contexte graphique comprend de préférence l'identifiant du pixel surveillé et l'information de position dudit pixel, telle que ses coordonnées en trois dimensions (x, y, z) dans le repère mémoire écran.

En complément, la liste d'information(s) de contexte graphique comprend en outre un ou plusieurs attributs graphiques, tels que l'identifiant de texture, la couleur ou encore la profondeur du pixel surveillé.

En complément encore, la liste d'information(s) de contexte graphique comprend l'information fonctionnelle pour le pixel surveillé, cette information fonctionnelle permettant par exemple d'indiquer que le pixel surveillé appartient à une ligne d'horizon, une position d'aiguille dans un cadran, une graduation d'échelle, un curseur d'échelle, un caractère alphanumérique ou encore à un maillage de scène.

En parallèle de la délivrance de ladite liste d'information(s) de contexte graphique pour chaque pixel surveillé au dispositif de supervision 14, le processeur graphique 18 compose, lors de l'étape 130 et via son module de composition 32, chaque image 34 à partir des couches intermédiaires 30 générées.

Dans l'exemple de la figure 2, le module de composition 32 reçoit, de la part du module de génération 22, un lot de couches intermédiaires 30 générées, comme représenté par la flèche F3, les couches intermédiaires 30 étant notées C1 à C6 dans cet exemple, puis le module de composition 32 compose l'image 34 à partir de ces couches intermédiaires 30 et délivre l'image composée 34 au module d'affichage 24, comme représenté par la flèche F4 à la figure 2. Cette composition d'images 34 consiste typiquement en un positionnement des couches intermédiaires 30, notées C1 à C6, les unes par rapport aux autres, ainsi qu'en une superposition de certaines couches les unes sur les autres.

L'étape de composition 130 est suivie optionnellement d'une étape de mélange 140 lors de laquelle le processeur graphique 18 mélange, via son module d'affichage 24, jouant également le rôle de module de mélange, une image 34 composée par le module de composition 32 avec une vidéo, ou un flux vidéo, stockée dans la mémoire de stockage 28, afin d'afficher lors de l'étape suivante 150, le mélange 40 d'une image et d'une vidéo, comme représenté par la flèche F5 à la figure 2.

Bien entendu, en l'absence de l'étape de mélange 140, le module d'affichage 24 affiche alors, lors de l'étape d'affichage 150, la ou les images composées 34 à l'écran 20.

L'homme du métier comprendra en outre que dans l'exemple de la figure 2, les flèches F3 et F4 ont seulement pour but d'illustrer le type de données traitées entre le module de génération 22 et le module de composition 32 d'une part, puis entre le module de composition 32 et le module d'affichage 24 d'autre part. Les flèches F3 et F4 ne représentent donc pas des données qui seraient délivrées par le processeur graphique 18 à destination d'un dispositif externe au processeur graphique 18.

L'homme du métier comprendra de même que, par souci de simplification du dessin, les couches intermédiaires 30 et l'image composée 34 sont représentées à l'extérieur du processeur graphique 18 sur la figure 2, alors qu'elles sont bien entendu traitées à l'intérieur du processeur graphique 18, les couches intermédiaires 30 générées par le module de génération 22 étant par exemple stockées dans la mémoire de stockage 28 pour être ensuite utilisées par le module de composition 32 afin de composer chaque image 34 respective.

Sur la figure 2, les flèches F2, et respectivement F5, représentent des données issues du processeur graphique 18. La flèche F2 correspond aux listes respectives d'information(s) de contexte graphique délivrées pour les pixels surveillés, par l'unité de surveillance 26 au dispositif de supervision 14. La flèche F5 représente le mélange 40 d'images et de vidéo, ou en variante l'image, délivré à l'écran d'affichage 20 en sortie du processeur graphique 18, afin d'être affiché à l'écran.

L'unité de surveillance 26 permet alors d'effectuer une surveillance réelle du fonctionnement du processeur graphique 18, l'unité de surveillance 26 délivrant, pour chaque pixel surveillé, la liste respective d'informations(s) de contexte graphique au dispositif de supervision 14, et cette liste d'information(s) de contexte graphique fournissant au dispositif de supervision 14 des informations relatives à chaque pixel surveillé juste avant son affichage à l'écran 20, ou bien juste avant la composition d'images 34.

Chaque liste d'information(s) de contexte graphique est déterminée notamment après que l'ensemble des transformations mises en oeuvre par le moteur géométrique 36, puis par le moteur de rendu 38, a été appliqué. La surveillance de chaque pixel, offerte par l'unité de surveillance 26, est alors représentative de ce qui va être affiché à l'écran 20 pour chaque pixel surveillé, et la surveillance est alors dite réelle.

En outre, l'unité de surveillance 26 est intégrée directement au module de génération 22, ce qui permet d'effectuer cette surveillance de pixel(s), via la détermination de la liste respective d'informations(s) de contexte graphique pour chaque pixel surveillé, juste après la génération dudit pixel. Cette surveillance est donc moins complexe et plus facile à mettre en oeuvre que la surveillance générique du processeur graphique de l'état de la technique.

A partir de l'identifiant de chaque pixel surveillé, reçu en entrée du processeur graphique 18, et notamment en entrée du module de génération 22, l'unité de surveillance 26 élabore la liste d'information(s) de contexte graphique en incluant, en outre dudit identifiant, au moins une information parmi l'information de position du pixel, et un ou plusieurs attributs graphiques, tels que l'information de visibilité, l'information de texture et l'information de couleur du pixel surveillé. Comme indiqué précédemment, l'information incluse dans la liste d'information(s) de contexte graphique, en outre de l'identifiant du pixel surveillé, est de préférence la position dudit pixel, et le ou les attributs graphiques étant alors facultatifs.

On conçoit ainsi que le processeur graphique 18 selon l'invention permet une meilleure surveillance de son fonctionnement, et que le système avionique 10 selon l'invention offre alors un fonctionnement plus sûr avec le dispositif de supervision 14 qui effectue une supervision efficace du fonctionnement du processeur graphique 18, ceci à l'aide de la liste d'information(s) de contexte graphique délivrée par l'unité de surveillance 26 pour chaque pixel surveillé.

## Revendications

1. Processeur graphique (18), comprenant :
- un module de génération (22) configuré pour générer au moins un ensemble de pixel(s) à afficher ;
- un module d'affichage (24) relié au module de génération (22), le module d'affichage (24) étant configuré pour afficher chaque ensemble de pixel(s) sur un écran (20) ;
**caractérisé en ce que** le processeur graphique (18) comprend en outre :
- une unité de surveillance (26) du bon fonctionnement du processeur graphique (18) intégrée au module de génération (22), l'unité de surveillance (26) étant configurée pour déterminer une liste d'information(s) de contexte graphique pour au moins un pixel et pour délivrer ladite liste à un dispositif électronique externe de supervision (14) qui effectue une supervision du fonctionnement du processeur graphique (18), apte à être relié au processeur graphique (18).

2. Processeur graphique (18) selon la revendication 1, dans lequel chaque ensemble de pixel(s) comporte une pluralité de pixels correspondant à un groupe de primitive(s) géométrique(s) avec des points caractéristiques, et l'unité de surveillance (26) est configurée pour déterminer une liste d'information(s) de contexte graphique pour au moins l'un des pixels correspondant auxdits points caractéristiques.

3. Processeur graphique (18) selon la revendication 2, dans lequel l'unité de surveillance (26) est configurée pour déterminer une liste d'information(s) de contexte graphique seulement pour les pixels correspondant auxdits points caractéristiques.

4. Processeur graphique (18) selon l'une quelconque des revendications précédentes, dans lequel le module de génération (22) comporte un moteur géométrique (36) apte à générer au moins un groupe de primitive(s) géométrique(s) et un moteur de rendu (38) apte à convertir chaque groupe de primitive(s) géométrique(s) en un ensemble respectif de pixel(s),
l'unité de surveillance (26) étant de préférence intégrée au moteur de rendu (38).

5. Processeur graphique (18) selon l'une quelconque des revendications 2 à 4, dans lequel chaque primitive géométrique est choisie parmi le groupe consistant en : un segment, un arc de cercle, une courbe de Bézier, et un polygone ;
chaque primitive géométrique étant de préférence un segment avec deux extrémités ou un polygone avec des sommets, les extrémités du segment ou les sommets du polygone formant des points caractéristiques respectifs.

6. Processeur graphique (18) selon l'une quelconque des revendications précédentes, dans lequel chaque liste d'information(s) de contexte graphique comprend une ou plusieurs informations choisies parmi le groupe consistant en : un identifiant du pixel surveillé, une information de visibilité à l'écran du pixel ; une information de position du pixel ; une information de texture du pixel ; et une information de couleur du pixel.

7. Processeur graphique (18) selon l'une quelconque des revendications précédentes, dans lequel au moins une liste d'information(s) de contexte graphique comprend en outre une information fonctionnelle caractérisant une fonction associée au pixel surveillé ;
chaque fonction étant de préférence choisie parmi le groupe consistant en : une ligne d'horizon, une position d'aiguille dans un cadran, une graduation d'échelle, un curseur d'échelle, un segment de caractère alphanumérique, et un point de maillage d'une scène.

8. Processeur graphique (18) selon l'une quelconque des revendications précédentes, dans lequel le module de génération (22) est configuré pour générer au moins une couche intermédiaire (30) d'image, chaque couche intermédiaire (30) comportant un ensemble respectif de pixel(s), et le processeur graphique (18) comprend en outre un module de composition (32) configuré pour composer une image (34) à partir de la ou des couches intermédiaires (30) générées par le module de génération (22), le module d'affichage (24) étant alors apte à afficher l'image (34) composée par le module de composition (32).

9. Plateforme (12) comprenant un processeur graphique (18) et un processeur central (16), le processeur graphique (18) étant relié au processeur central (16),
**caractérisée en ce que** le processeur graphique (18) est selon l'une quelconque des revendications précédentes.

10. Système avionique (10) destiné à être embarqué à bord d'un aéronef, le système avionique (10) comprenant une plateforme avionique (12) et un dispositif électronique (14) de supervision de la plateforme (12), relié à la plateforme (12),
**caractérisé en ce que** la plateforme (12) est selon la revendication précédente.

11. Procédé d'affichage de pixel(s) sur un écran (20), le procédé étant mis en œuvre par un processeur graphique (18) et comprenant :
- la génération (100) d'au moins un ensemble de pixel(s) à afficher ;
- l'affichage (150) de chaque ensemble de pixel(s) sur l'écran (20) ;
**caractérisé en ce qu'**il comprend en outre :
- la surveillance (120) du bon fonctionnement du processeur graphique (18) de chaque ensemble de pixel(s), avec la détermination d'une liste d'information(s) de contexte graphique pour au moins un pixel et la délivrance de ladite liste à un dispositif électronique externe de supervision (14) qui effectue une supervision du fonctionnement du processeur graphique (18), apte à être relié au processeur graphique (18).

## Patentansprüche

1. Grafikprozessor (18), umfassend:
- ein Erzeugungsmodul (22), das konfiguriert ist, um mindestens einen Satz von anzuzeigenden Pixel(n) zu erzeugen;
- ein Anzeigemodul (24), das mit dem Erzeugungsmodul (22) verbunden ist, wobei das Anzeigemodul (24) konfiguriert ist, um jeden Satz von Pixel(n) auf einem Bildschirm (20) anzuzeigen;
**dadurch gekennzeichnet, dass** der Grafikprozessor (18) ferner Folgendes umfasst:
- eine Überwachungseinheit (26) für den guten Betrieb des Grafikprozessors (18), die in das Erzeugungsmodul (22) integriert ist, wobei
die Überwachungseinheit (26) konfiguriert ist, um eine Liste von Grafikkontextinformation(en) für mindestens ein Pixel zu bestimmen und um die Liste an eine externe elektronische Überwachungsvorrichtung (14) bereitzustellen, die eine Überwachung des Betriebs des Grafikprozessors (18) durchführt, die geeignet ist, um mit dem Grafikprozessor (18) verbunden zu sein.

2. Grafikprozessor (18) nach Anspruch 1, wobei jeder Satz von Pixel(n) eine Vielzahl von Pixeln umfasst, die einer Gruppe von geometrischen Primitiven mit charakteristischen Punkten entsprechen, und die Überwachungseinheit (26) konfiguriert ist, um eine Liste von Grafikkontextinformation(en) für mindestens eines der Pixel zu bestimmen, die den charakteristischen Punkten entsprechen.

3. Grafikprozessor (18) nach Anspruch 2, wobei die Überwachungseinheit (26) konfiguriert ist, um eine Liste von Grafikkontextinformation(en) nur für die Pixel zu bestimmen, die den genannten charakteristischen Punkten entsprechen.

4. Grafikprozessor (18) nach einem der vorherigen Ansprüche, wobei das Erzeugungsmodul (22) eine Geometrie-Engine (36) umfasst, die geeignet ist, mindestens eine Gruppe geometrischer Primitiven zu erzeugen, und eine Rendering-Engine (38), die geeignet ist, um jede Gruppe geometrischer Primitiven in einen entsprechenden Satz von Pixeln umzuwandeln,
wobei die Überwachungseinheit (26) vorzugsweise in die Rendering-Engine (38) integriert ist.

5. Grafikprozessor (18) nach einem der Ansprüche 2 bis 4, wobei jedes geometrische Primitiv ausgewählt ist aus der Gruppe, bestehend aus: einem Segment, einem Kreisbogen, einer Bezier-Kurve und einem Polygon;
wobei jedes geometrische Primitiv vorzugsweise ein Segment mit zwei Enden oder ein Polygon mit Eckpunkten ist, wobei die Enden des Segments oder die Eckpunkte des Polygons jeweilige charakteristische Punkte bilden.

6. Grafikprozessor (18) nach einem der vorherigen Ansprüche, wobei jede Liste von Grafikkontextinformationen eine oder mehrere Informationen umfasst, die ausgewählt sind aus der Gruppe, bestehend aus: einer Kennung des überwachten Pixels; Informationen über die Bildschirmsichtbarkeit des Pixels; Informationen über die Position des Pixels; Informationen über die Textur des Pixels; und Informationen über die Farbe des Pixels.

7. Grafikprozessor (18) nach einem der vorherigen Ansprüche, wobei mindestens eine Liste von Grafikkontextinformationen zusätzlich eine Funktionsinformation umfasst, die eine Funktion charakterisiert, die mit dem überwachten Pixel assoziiert ist;
wobei jede Funktion vorzugsweise ausgewählt ist aus der Gruppe, bestehend aus: einer Horizontlinie, einer Zeigerposition in einem Zifferblatt, einer Skaleneinteilung, einem Skalenschieber, einem alphanumerischen Zeichensegment und einem Netzpunkt einer Szene.

8. Grafikprozessor (18) nach einem der vorherigen Ansprüche, wobei das Erzeugungsmodul (22) konfiguriert ist, um mindestens eine Zwischenschicht (30) des Bilds zu erzeugen, wobei jede Zwischenschicht (30) einen jeweiligen Satz von Pixeln aufweist, und der Grafikprozessor (18) ferner ein Zusammensetzungsmodul (32) umfasst, das konfiguriert ist, um ein Bild (34) aus der/den vom Erzeugungsmodul (22) erzeugten Zwischenschicht(en) (30) zusammenzusetzen, wobei das Anzeigemodul (24) dann in der Lage ist, das von dem Zusammensetzungsmodul (32) zusammengesetzte Bild (34) anzuzeigen.

9. Plattform (12), umfassend einen Grafikprozessor (18) und einen Zentralprozessor (16), wobei der Grafikprozessor (18) mit dem Zentralprozessor (16) verbunden ist,
**dadurch gekennzeichnet, dass** der Grafikprozessor (18) gemäß einem der vorherigen Ansprüche ist.

10. Avioniksystem (10), das dazu bestimmt ist, an Bord eines Flugzeugs zu sein, wobei das Avioniksystem (10) eine Avionikplattform (12) und eine elektronische Vorrichtung (14) zur Überwachung der Plattform (12), die mit der Plattform (12) verbunden ist, umfasst, **dadurch gekennzeichnet, dass** die Plattform (12) gemäß dem vorherigen Anspruch ist.

11. Verfahren zum Anzeigen von Pixeln auf einem Bildschirm (20), wobei das Verfahren von einem Grafikprozessor (18) implementiert wird und Folgendes umfasst:
- Erzeugen (100) mindestens eines Satzes von anzuzeigenden Pixeln;
- Anzeigen (150) von jedem Satz von Pixeln auf dem Bildschirm (20); **dadurch gekennzeichnet, dass** es ferner umfasst:
- Überwachen (120) des guten Betriebs des Grafikprozessors (18) von jedem Satz von Pixeln, mit Bestimmen einer
Liste von Grafikkontextinformationen für mindestens ein Pixel und Ausgeben dieser Liste an eine externe elektronische Überwachungsvorrichtung (14), die eine Überwachung des Betriebs des Grafikprozessors (18) durchführt, der mit dem Grafikprozessor (18) verbunden werden kann.

## Claims

1. A graphics processor (18), comprising:
- a generating module (22) configured to generate at least one set of pixel(s) to be displayed;
- a display module (24) connected to the generating module (22), the display module (24) being configured to display each set of pixel(s) on a screen (20);
**characterized in that** the graphics processor (18) further comprises:
- a monitoring unit (26) for monitoring the correct operation of the graphics processor (18) integrated into the generating module (22), the monitoring unit (26) being configured to determine a list of graphic context information item(s) for at least one pixel and to deliver said list to an external electronic supervision device (14) which supervises the operation of the graphics processor (18), able to be connected to the graphics processor (18).

2. The graphics processor (18) according to claim 1, wherein each set of pixel(s) includes a plurality of pixels corresponding to a group of geometric primitive(s) with characteristic points, and the monitoring unit (26) is configured to determine a list of graphic context information item(s) for at least one of the pixels corresponding to said characteristic points.

3. The graphics processor (18) according to claim 2, wherein the monitoring unit (26) is configured to determine a list of graphic context information item(s) only for the pixels corresponding to said characteristic points.

4. The graphics processor (18) according to any one of the preceding claims, wherein the generating module (22) includes a geometric engine (36) able to generate at least one group of geometric primitive(s) and a rendering engine (38) able to convert each group of geometric primitive(s) into a respective set of pixel(s);
the monitoring unit (26) being preferably integrated into the rendering engine (38).

5. The graphics processor (18) according to any one of the claims 2 to 4, wherein each geometric primitive is chosen from the group consisting of: a segment, an arc of circle, a Bézier curve and a polygon;
each geometric primitive being preferably a segment with two ends or a polygon with apices, the end of the segment or the apices of the polygon forming respective characteristic points.

6. The graphics processor (18) according to any one of the preceding claims, wherein each list of graphic context information item(s) comprises one or several information items chosen from the group consisting of: an identifier of the monitored pixel, a visibility information item of the pixel on the screen; a position information item of the pixel; a texture information item of the pixel; and a color information item of the pixel.

7. The graphics processor (18) according to any one of the preceding claims, wherein at least one list of graphic context information item(s) further comprises a functional information item characterizing a function associated with the monitored pixel;
each function being preferably chosen from the group consisting of: a horizon line, a needle position on a dial, a scale graduation, a scale cursor, an alphanumeric character segment, and a mesh point of a scene.

8. The graphics processor (18) according to any one of the preceding claims, wherein the generating module (22) is configured to generate at least one intermediate image layer (30), each intermediate layer (30) including a respective set of pixel(s), and the graphics processor (18) further comprises a composition module (32) configured to make up an image (34) from the intermediate layer(s) (30) generated by the generating module (22), the display module (24) then being able to display the image (34) made up by the composition module (32).

9. A platform (12) comprising a graphics processor (18) and a central processor (16), the graphics processor (18) being connected to the central processor (16),
**characterized in that** the graphics processor (18) is according to any one of the preceding claims.

10. An avionics system (10) intended to be embedded in an aircraft, the avionics system (10) comprising an avionics platform (12) and an electronic supervision device (14) for supervising the platform (12), connected to the platform (12),
**characterized in that** the platform (12) is according to the preceding claim.

11. A method for displaying pixel(s) on a screen (20), the method being implemented by a graphics processor (18) and comprising:
- generating (100) at least one set of pixel(s) to be displayed;
- displaying (150) each set of pixel(s) on the screen (20);
**characterized in that** it further comprises:
- monitoring (120) the correct operation of the graphics processor (18), by monitoring each set of pixel(s), with the determination of a list of graphic context information item(s) for at least one pixel and the delivery of said list to an external electronic supervision device (14) which supervises the operation of the graphics processor (18), able to be connected to the graphics processor (18).
